(19) **Europäisches Patentamt / European Patent Office / Office européen des brevets**

(11) **EP 2 468 804 A1**

(12) **EUROPEAN PATENT APPLICATION**

(43) Date of publication:
    **27.06.2012 Bulletin 2012/26**

(21) Application number: **12000508.7**

(22) Date of filing: **25.01.2008**

(51) Int Cl.:
    *C08J 5/22* (2006.01)        *C08J 7/18* (2006.01)
    *H01M 8/10* (2006.01)

(84) Designated Contracting States:
    **AT BE BG CH CY CZ DE DK EE ES FI FR GB GR HR HU IE IS IT LI LT LU LV MC MT NL NO PL PT RO SE SI SK TR**

(30) Priority: **26.01.2007 GB 0701449**

(62) Document number(s) of the earlier application(s) in accordance with Art. 76 EPC:
    **08701926.1 / 2 125 940**

(71) Applicant: **The Secretary Of State For Defence DSLT**
    **Wiltshire SP4 OJQ (GB)**

(72) Inventors:
    • **Browning, Darren, Jonathan**
      **Wiltshire, SP4 0JK (GB)**

    • **Lovell, Keith, Victor**
      **Salisbury**
      **Wiltshire**
      **SP4 JQ (GB)**
    • **Horsfall, Jacqueline, Anne**
      **Shrivenham**
      **Swindon, Wiltshire SN6 8LA (GB)**
    • **Waring, Susan, Christine**
      **Shrivenham**
      **Swindon, Wiltshire SN6 8LA (GB)**

(74) Representative: **Farnsworth, Alastair Graham**
    **DIPR Formalties Section**
    **Oak 2E Nr.6228**
    **Abbey Wood (North)**
    **Bristol BS34 8JH (GB)**

Remarks:
    This application was filed on 26-01-2012 as a divisional application to the application mentioned under INID code 62.

(54) **Anion exchange membranes**

(57) A method for preparing an anion exchange membrane suitable for use in an alkaline fuel cell and particularly in a direct borohydride fuel cell, involves radiation grafting a hydrocarbon polymer film with a monomer and adding a quaternising agent. The degree of grafting is improved by mixing the monomer with a diluent comprising alcohol and a hydrocarbon solvent.

**EP 2 468 804 A1**

## Description

The present invention relates to the production of anion exchange membranes and particularly to the production of anion exchange membranes suitable for use in alkaline fuel cells and more particularly in direct borohydride fuel cells.

Anion exchange membranes (AEMs) are known and are used in various separation and purification applications, for example in electrodialysis, salt-splitting and metathesis. They can be used either as a monopolar membrane or as a layer for a bipolar membrane; they can be prepared by a number of different techniques, usually by amination of halomethylated polymers with various diamines. EP 0563851 (Fraunhofer) describes a process for the preparation of a bipolar membrane comprising an anion-selective layer and a cation-selective layer; the layers being produced from polymer solutions. JP2003096219 (Asahi Glass) describes a process for the preparation of an AEM comprising a polymer having a crosslinking structure formed by reacting an aromatic polysulfonic polymer, having a specific haloalkyl group, with a polyamine and monoamine. One problem with many known AEMs is that their stability, especially in concentrated alkaline environments, is poor, due to the decomposition of the anion exchange groups in concentrated alkali solution.

Poor stability in alkaline environments is a drawback for any ion exchange membrane used in alkaline fuel cells. WO2006003182 (Solvay) describes AEMs suitable for use in solid alkaline fuel cells. The AEMs comprise diamines or polyamines coupled to a support polymer via a sulphonamide linkage. At least one nitrogen atom of the diamine or polyamine is a quatemised nitrogen atom acting as an anion exchange group. However, there is a constant desire to improve the ionic conductivity of such membranes, whilst maintaining adequate chemical stability.

The direct borohydride fuel cell (DBFC) is a subcategory of the alkaline fuel cell in which the fuel is a solution of sodium borohydride. The primary advantage of sodium borohydride over the hydrogen in a conventional alkaline fuel cell is that sodium borohydride is easier to store than hydrogen, leading to improved system energy densities. Furthermore, the highly alkaline fuel and the waste $Na_2B_4O_7$ (borax) which is produced, prevent carbon dioxide poisoning of the fuel cell.

The DBFC also has advantages over the direct methanol fuel cell (DMFC) which suffers from low activity and large methanol crossover rate at the membrane. This results in reduced energy efficiency and cell performance. By contrast the DBFC produces no gaseous by-products and higher specific energy. The DBFC can operate using either a cation exchange membrane (CEM) or an AEM. Use of an AEM has the advantage that it does not require recirculation of sodium hydroxide from the cathode to the anode. However, the few commercially available AEMs have been developed for other applications and have not been optimised for use in alkaline fuel cells and, in particular the DBFC.

The present invention aims to provide an AEM having increased ionic conductivity, high chemical stability in alkaline environments and low permeability in order to minimise fuel crossover.

The present invention, therefore, provides a method for preparing an anion exchange membrane comprising the steps of: selecting a hydrocarbon polymer film; radiation grafting the hydrocarbon polymer film with a monomer and adding a quaternising agent to impart ionic conductivity, wherein the monomer is presented in the form of a monomer/ diluent mixture and wherein the diluent comprises alcohol and a hydrocarbon solvent.

The anion exchange membrane is preferably washed in an appropriate solvent to remove any homopolymer and dried to constant weight. If this step is omitted unreacted monomer will wash off the polymer during use and will affect the ion conductivity of the membrane over time.

The diluent preferably comprises at least 10% by volume alcohol and the alcohol used is preferably methanol. The hydrocarbon solvent is advantageously selected from the group consisting of aromatic or aliphatic hydrocarbons, with toluene, xylene or benzene being the preferred options.

In order to reduce cost the monomer content of the monomer/diluent mixture is minimised and is preferably less than 60% by volume and more preferably is in the range 30-50% by volume.

It has been found that using vinyl benzene chloride (VBC) or vinyl pyridine (VPy) as the monomer results in particularly improved membrane properties.

The hydrocarbon polymer film may be preformed or prepared from powder or granule. Whilst any hydrocarbon polymer film may be used both low density polyethylene (LDPE) and high density polyethylene (HDPE) are widely available and relatively cheap and are thus the preferred starting materials.

Radiation grafting has been known for many years and has proved a successful route to prepare different types of membranes. The radiation grafting method allows a hybrid material to be formed from two completely different materials. For example, low density polyethylene is a stable hydrocarbon film, which is hydrophobic and not ion-conducting. Acrylic acid is a hydrophilic, acidic monomer; in its polymeric form, it is mechanically weak and soluble in water. However, if a graft copolymer is formed from these two components, a mechanically strong, insoluble, hydrophilic, acidic ion exchange membrane is obtained.

There are two basic methods for radiation grafting, mutual grafting (MG) and post-irradiation grafting (PIG); the difference being at which step the irradiation is applied to the film. In MG the polymer and monomer are reacted together while being irradiated, whereas for PIG, the films are irradiated alone in an oxygen containing atmosphere to form fairly stable peroxy radicals and then reacted with the monomer in a separate reaction. MG is known to provide better membrane uniformity and conductivity, however, since the PIG irradiated polymer can be kept in its reactive state at low temperature for up to a year without losing its ability to graft, PIG may be more suitable for the preparation of larger quantities of membrane. The method chosen may also depend upon the monomer and polymer involved. Therefore, the present invention applies equally to both methods of radiation grafting.

In practice the grafted copolymers have been found to have poor ionic conductivity as prepared, because the moieties grafted onto the polymers (eg VBC & VPy) are not themselves ionically conducting. Therefore, a post treatment is required to impart ionic conductivity. This is called quaternisation. Depending upon the monomer involved, a number of agents can be used for this. The quaternising agent may be selected from the group consisting of amines and more preferably an alkyl amine. It has been found that the most preferred quaternising agents are hydrochloric acid (HCl), 2-chloroacetamide (2-CA), trimethylamine (TMA); triethylamine (TEA) or dimethylformamide (DMF). The quaternising agent may be a crosslinker in order to improve the chemical stability of the membrane, eg. N,N,N',N'-tetramethylhexane-1,6-diamine, diethylaminoethylamine, diethylaminopropylamine (ref. J. Varcoe et al, Chem. Comm., 2006, 13, 1428-1429).

The invention will now be described, by way of example, with reference to the accompanying drawings, in which:

Figure 1 illustrates the reaction scheme using vinyl benzyl chloride as the monomer.
Figure 2 illustrates the reaction scheme using 4-vinyl pyridine as the monomer.
Figure 3 illustrates the apparatus used for the mutual grafting step of the method according to one embodiment of the present invention.

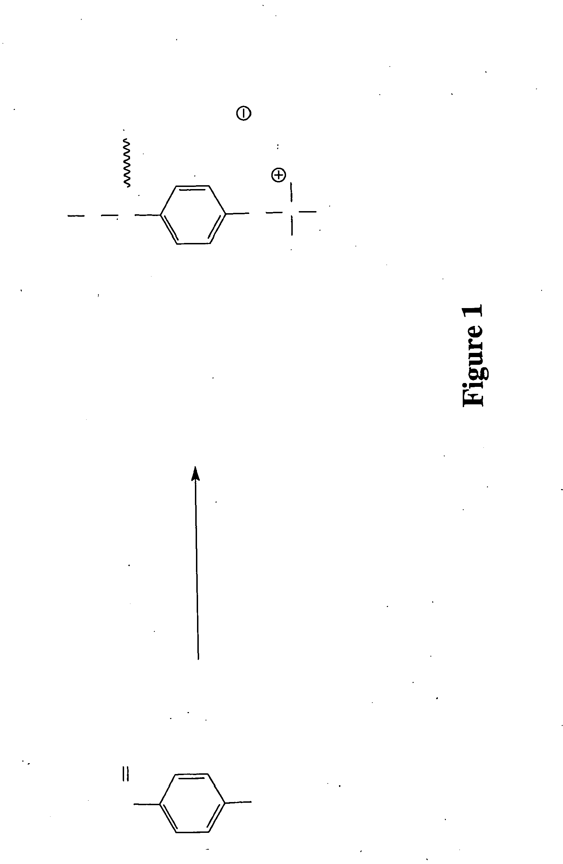

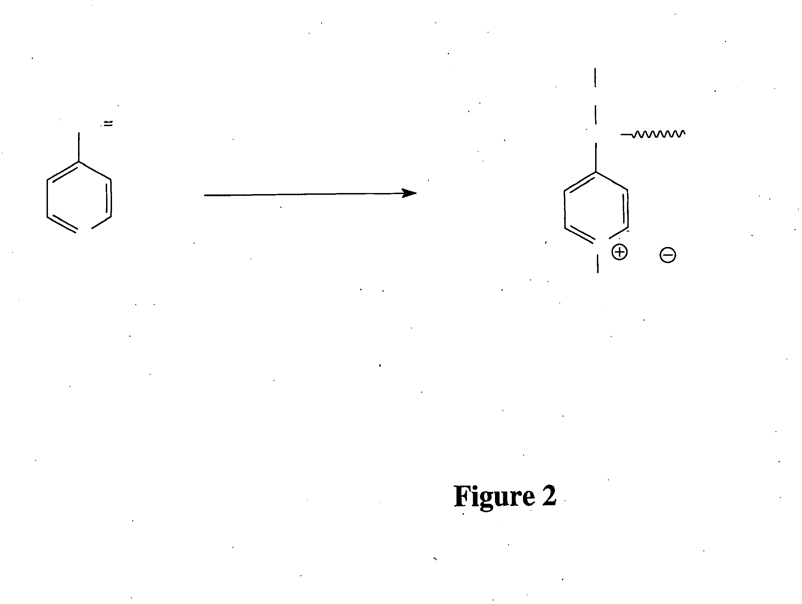

Figure 1 illustrates the reaction scheme of one embodiment of the invention in which VBC is grafted and quaternised using TMA. Figure 2 illustrates the reaction scheme of another embodiment of the invention in which VPy is grafted and quaternised using HCl.

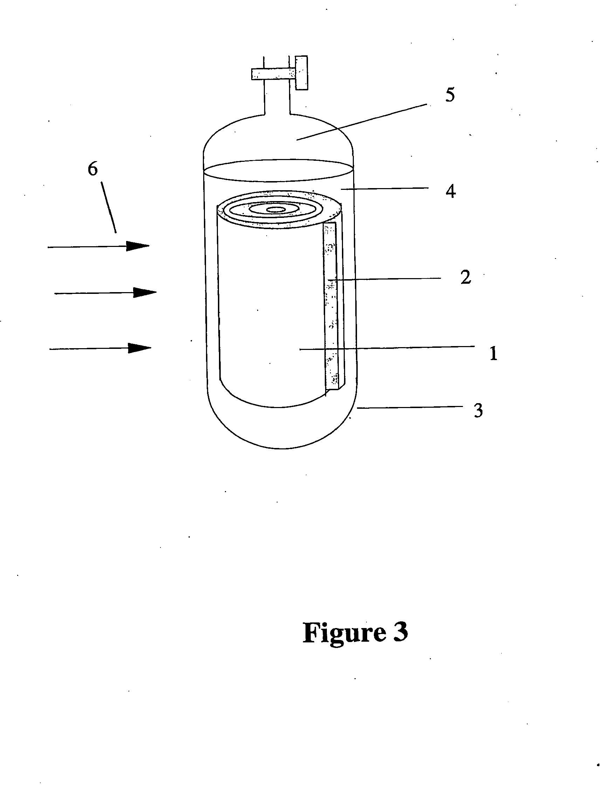

Referring to Figure 3 pieces of the chosen polymer film 1 are interleaved with a nonwoven, absorbent, interlayer material 2 and placed in a glass grafting vessel 3. The monomer/diluent mixture 4 is added until the roll is saturated. The oxygen in the vessel is then removed by either purging with nitrogen or by placing the vessel under vacuum in order to create an inert atmosphere 5 above the reactants. The vessel is then irradiated with ionising radiation 6. In the Examples described below the irradiation was carried out at $23 \pm 1°C$ in a Cobalt 60 γ source for a pre-determined time at a known dose rate. Once grafted, the films are washed in an appropriate solvent to remove any homopolymer, prior to drying to constant weight in an oven at 70°C.

The grafted film is then soaked in an aqueous solution of the chosen quaternising agent.

Experimental

All the polymers and reagents were used as received. Low density polyethylene (LDPE), nominal thickness 50μm was supplied by BPI Films and high density polyethylene (HDPE), nominal thickness 40μm was supplied by Metal Box Co. 4-Vinyl benzyl chloride (VBC) was supplied by Aldrich® stabilised with 0.05% tert-butylcatechol and 0.05% nitroparaffin. 4-Vinyl pyridine (VPy), 95% was supplied by Aldrich®, stabilised with 100ppm hydroquinone. Demineralised water, supplied from a mixed bed Elgastat ®, with conductivity $<50\mu Scm^{-1}$. Toluene and methanol were supplied by Fisher Scientific, UK, SLR grade. Hydrochloric acid 5M Analar volumetric solution was supplied by Merck®, Trimethylamine (TMA), 50% wt solution in water, Triethylamine (TEA), 99.5%, 2-chloroacetamide (2-CA) and Dimthylformamide (DMF) was supplied by Aldrich®.

The membranes synthesised were characterised using a number of laboratory tests. These included areal resistivity in the electrolyte, ion exchange capacity (IEC), equilibrium electrolyte uptake (EEU), and chemical stability.

The degree of grafting (DOG) of the membranes was calculated using the following formula:

$$\frac{W_g - W_0}{W_g} \times 100 = \text{Degree of Grafting (\%)}$$

*Where:*
$W_0$ = weight of polymer film before grafting
$W_g$ = weight of grafted copolymer

This means that the DOG is equivalent to the amount of monomer in the polymer. Therefore a copolymer that has a DOG= 50% consists of 50% grafted monomer plus 50% original polymer.

For fuel cell use, it is important that the membrane has the lowest resistivity possible in order to maximise the efficiency of the cell. In order to rank the membranes synthesised, their electrolytic resistivity was measured by placing the membrane in a thermostatically controlled cell at a temperature of 25±1°C. An external torque clamp was used to ensure that the membranes were not over compressed during testing. The membrane samples were equilibrated in the electrolyte (6M NaOH) for a minimum of 16 hours prior to being measured. The resistivity measurements were taken using a Wayne Kerr Universal Bridge, Model B642 at a frequency of 1591.5 Hz, over a known test area. The resistivity value of the electrolyte pathway was measured using a polymer blank of comparable thickness to the membrane, with a hole cut in the test area. The "blank" measurement was then subtracted from the sample measurement. For each membrane, two samples were tested and the results averaged. The membrane resistivity was then calculated, taking into account the area of the sample.

The measurement of IEC is an indication of the ability of the ionic groups in the membrane to ionise and exchange different ions. It is therefore also a measure of the functionalisation of the membrane. A theoretical IEC can be calculated from the DOG for each of the moieties added which assumes that every grafted functional group will take place in the exchange reaction. Comparing the measured IEC with the theoretical value therefore gives a measure of the effectiveness of the quaternisation. However, the IEC measurement alone will not necessarily indicate how the membrane will perform in a fuel cell. If the membrane is not grafted throughout the thickness, it can still have a high IEC (if it has a large DOG), but it will also have a high resistivity measurement and would not be suitable for fuel cell use.

The IEC was measured as follows: approximately 0.5g of the membrane was equilibrated in 0.1M HCl solution for at least 24h at ambient temperature. The sample was then blotted dry and placed in 50ml of a known molarity sodium hydroxide solution (nominally 0.1M) and allowed to exchange for a further 24h at ambient temperature with occasional swirling. Aliquots of the exchanged NaOH solution were titrated to a phenolphthalein end-point against a known molarity HCl solution. The procedure was carried out in triplicate and the results averaged. The sample pieces in the exchange were then blotted dry and placed in a vacuum oven at 105±5°C and dried to constant weight.

In order to measure EEU the membranes were first weighed in their hydroxyl form after being dried at 40°C. They were then hydrated in 6M NaOH and left overnight at ambient temperature. The membranes were then removed from the NaOH, blotted to remove excess electrolyte from the surface and weighed. The EEU was calculated as:

$$EEU = \frac{W_1 - W_0}{W_0} \times 100$$

*Where :*
$W_0$ = Dry weight of membrane
$W_1$ = Weight of membrane wetted with electrolyte

In order to assess chemical stability the membranes were tested in both an oxidative and reductive environment as they would be subject to both of these in a fuel cell and an elevated temperature was used to provide the harshest test possible. The membranes in their dry, hydroxide form were weighed and their condition (colour, etc) noted. They were then treated in an aqueous solution of potassium hydroxide (68.8g) /potassium permanganate (3.2g) at 90°C for one hour (oxidative environment). The membranes were then rinsed in demineralised water and obvious physical changes noted. The same membrane was then immersed in an aqueous solution of sodium borohydride (30g)/sodium hydroxide (6M) at 70°C for 3 hours (reductive environment). The membranes were then washed in demineralised water, dried to constant weight and any physical change observed. The weight change was noted as a percentage. A large weight loss was taken as indicative of chemical instability and this was further checked by re-measurement of the areal resistivity and IEC.

Example 1

This example describes the mutual grafting reaction with vinyl benzyl chloride (VBC) as the monomer. The base polymer films for the membranes were a 50μm low density polyethylene (LDPE) and a 40μm high density poly-ethylene (HDPE). Other base polymers were also used, eg. ethylene tetrafluoroethylene (ETFE), though the membranes produced did not perform as well in characterization tests.

Experiments were carried out at varying dose rates (grafting time), while keeping the total dose constant, and differing total doses, (keeping the dose rate constant).

The optimum total radiation dose for the mutual membranes was found to be 1 Mrad at a low dose rate. A higher total dose resulted in an unwanted parasitic reaction (homopolymerisation) and gave a lower DOG. It was found that at the lower dose rates, the DOG increased.

Table 1 shows the effect of the diluent composition on the DOG achieved. It can be seen that the DOG is increased by the addition of methanol.

**Table 1. Effect of Monomer/Diluent Mixture Composition on Degree of Grafting**

| Membrane | %VBC | %Methanol | % Toluene | Degree of Grafting |
|---|---|---|---|---|
| LDPE-g-VBC | 40 | 0 | 60 | 16 |
| LDPE-g-VBC | 40 | 24 | 36 | 24 |
| LDPE-g-VBC | 40 | 30 | 30 | 26 |
| LDPE-g-VBC | 40 | 36 | 24 | 30 |
| HDPE-g-VBC | 40 | 24 | 36 | 26 |
| HDPE-g-VBC | 40 | 30 | 30 | 29 |
| HDPE-g-VBC | 40 | 36 | 24 | 31 |

A number of quaternising agents were used for the VBC copolymers, including TMA, DMF and TEA. Figure 1 illustrates the quaternisation of VBC copolymers with TMA. The membranes were soaked in an aqueous solution of the amine either with heating or at ambient temperature. The membranes were characterised as shown in Table 2.

**Table 2. Properties of VBC Grafted Copolymers**

| Membrane | DOG (%) | Quaternising Agent | Areal Resistivity in 6M NaOH | IEC (meq/g) | EEU% | Stability Test (% Loss) |
|---|---|---|---|---|---|---|
| LDPE-g-VBC | 9% | TMA | 1051 | - | - | - |
| LDPE-g-VBC | 17% | TMA | 0.27 | - | 27.17 | -6.11 |
| LDPE-g-VBC | 21% | TMA | 0.54 | - | - | - |
| | | TEA | 2.98 | - | - | -5.87 |
| LDPE-g-VBC | 24% | TMA | 0.32 | - | - | - |
| | | TEA | 1.36 | - | - | -8.60 |
| | | DMF | 2067 | - | 48 | 0 |
| LDPE-g-VBC | 26% | DMF | 989 | 0.763 | 16 | 0 |
| LDPE-g-VBC | 29% | DMF | 1165 | 0.665 | 41 | -0.06 |
| HDPE-g-VBC | 20% | TMA | 0.35 | - | 16.68 | -12.72 |
| HDPE-g-VBC | 22% | TMA | 0.34 | - | 27.51 | -5.18 |
| HDPE-g-VBC | 26% | TMA | 0.332 | - | - | - |
| | | DMF | 2306 | - | 28 | -0.04 |
| HDPE-g-VBC | 28% | TMA | 0.148 | 1.317 | - | - |
| | | DMF | 2034 | - | 36 | -0.04 |

Areal resistivity (in 6M NaOH) is a convenient and useful technique for assessing the potential performance of the membranes. It can be seen from Table 2 that VBC membranes with DOGs less than 17% and those quaternised with DMF have high resistivities likely to prevent their use in a fuel cell.

From Table 2, it can be seen that DMF does not perform well as a quaternising agent for the VBC graft copolymers. The membranes treated in this way have high areal resistivities and lower IECs than the theoretical value for that graft weight of VBC (29% $IEC_t$=1.709meq/g, measured=0.665meq/g). The best quaternising agent for the VBC copolymers is TMA which gives low resistivities and IECs comparable to the theoretical value. The best conditions were determined to be ambient temperature for 4 hours.

Two membranes, HDPE-g-VBC and LDPE-g-VBC both 22% DOG, quaternised with TMA, were placed in 6M NaOH solution and maintained at set temperatures between 25°C to 40°C for varying periods of time up to 60 days. The areal resistivities of the membranes were then re-measured and any change taken as an indicator of potential instability. The results are summarised in Table 3 and show that VBC grafted membranes are stable to at least 40°C and up to 60 days. The measured resistivities are considered to be within the experimental error associated with the measurement technique.

**Table 3. Stability of VBC copolymers in 6M NaOH at varying temperatures**

| Sample | Temperature °C | Areal resistivity in 6M NaOH ($\Omega$ cm$^2$) | | |
|---|---|---|---|---|
| | | 0 days | 30 days | 60 days |
| HDPE-g-VBC | 25 | 0.37 | 0.25 | 0.38 |
| LDPE-g-VBC | 25 | 0.47 | 0.33 | 0.46 |
| HDPE-g-VBC | 40 | 0.39 | 0.32 | 0.47 |
| LDPE-g-VBC | 40 | 0.42 | 0.43 | 0.50 |

Example 2

This example describes the mutual grafting reaction with vinyl pyridine (VPy) as the monomer. Again the polymer films used were a 50$\mu$m LDPE and a 40$\mu$m HDPE.

The quaternising reaction for the VPy grafted membranes was carried out using a thermal treatment with either 5M HCl or 2CA.

The DOGs obtained ranged from 10% and 60%. Although high grafts can be obtained using VPy as a monomer, once the DOG is above a certain level, the properties of the membrane are impaired; DOGs above 58% were too brittle to be of use as membranes.

The results are summarised in Table 4 and show that the VPy grafted membranes with a DOG> 29%, aminated with either 5M HCl or 2CA, have low areal resistivity.

**Table 4, Properties of VPy Grafted Copolymers**

| Membrane | DOG (%) | Quaternising Agent | Areal Resistivity in 6M NaOH | IEC (meq/g) | EEU% | Stability Test (% Loss) |
|---|---|---|---|---|---|---|
| LDPE-g-VPy | 29 | 2CA | 0.48 | - | 38 | -4.42 |
| LDPE-g-VPy | 35 | 2CA | 1.33 | - | - | - |
| LDPE-g-VPy | 46 | 2CA | 0.52 | - | 13.74 | -0.23 |
| | | 5MHCl | 1.19 | - | 100 | -1.09 |
| LDPE-g-VPy | 48 | 2CA | 0.52 | - | - | - |
| | | 5MHCl | 1.20 | 5.04 | 10.5 | 0 |
| LDPE-g-VPy | 57 | 2CA | 0.43 | - | 22.88 | -48.12 |
| | | 5MHCl | 1.75 | - | - | - |
| HDPE-g-VPy | 22 | 5MHCl | 6849 | - | 36.36 | - |
| HDPE-g-VPy | 38 | 2CA | 0.59 | - | 29.76 | -5.43 |
| HDPE-g-VPy | 59 | 2CA | 0.30 | - | 17.49 | -44.20 |

This invention was made with US Government support under Grant N00014-02-1-0225 awarded by the US Office of Naval Research. The US Government has certain rights in the invention.

**Claims**

1.    A method for preparing an anion exchange membrane comprising the steps of: selecting a hydrocarbon polymer film; radiation grafting the hydrocarbon polymer film with a monomer and adding a quaternising agent to impart ionic conductivity, wherein:

the monomer is vinyl pyridine (VPy) and is presented in the form of a monomer/diluent mixture;

the diluent comprises an alcohol and a hydrocarbon solvent; and

the quaternising agent is selected from the group consisting of hydrochloric acid (HCl), 2-chloroacetamide (2-CA) and dimethylformamide (DMF).

2. A method according to Claim 1, further comprising washing the anion exchange membrane in an appropriate solvent to remove any homopolymer and drying to constant weight.

3. A method according to Claim 1 or Claim 2, in which the monomer/diluent mixture comprises at least 10% by volume alcohol.

4. A method according to any preceding Claim, in which the alcohol comprises methanol.

5. A method according to according to any preceding Claim, in which the hydrocarbon solvent is selected from the group consisting of aromatic hydrocarbons and aliphatic hydrocarbons.

6. A method according to Claim 5, in which the hydrocarbon solvent is selected from the group consisting of toluene, xylene and benzene.

7. A method according to any preceding Claim, in which the monomer content of the monomer/diluent mixture is less than 60% by volume.

8. A method according to Claim 7, in which the monomer content of the monomer/diluent mixture is 30-50% by volume.

9. A method according to any preceding Claim in which the hydrocarbon polymer film is selected from the group consisting of low density polyethylene (LDPE) and high density polyethylene (HDPE).

10. A method according to any preceding Claim, in which the radiation grafting step is mutual grafting.

11. A method according to any of Claims 1 to 9, in which the radiation grafting step is post-irradiation grafting.

12. A method for preparing an anion exchange membrane substantially as hereinbefore described with reference to Figure 2 of the accompanying drawings.

13. An anion exchange membrane prepared in accordance with the method of any preceding Claim.

14. An alkaline fuel cell incorporating an anion exchange membrane according to Claim 13.

**Figure 1**

**Figure 2**

EP 2 468 804 A1

**Figure 3**

Europäisches
Patentamt

European
Patent Office

Office européen
des brevets

# EUROPEAN SEARCH REPORT

Application Number

EP 12 00 0508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 414 090 A (D AGOSTINO VINCENT F [US] ET AL) 8 November 1983 (1983-11-08) | 13,14 | INV.<br>C08J5/22 |
| A | * claims; examples * | 1-12 | C08J7/18<br>H01M8/10 |
| | ----- | | |
| A | US 5 643 968 A (ANDREOLA CHRISTOPHER [US] ET AL) 1 July 1997 (1997-07-01) | 1-14 | |
| | * the whole document * | | |
| | ----- | | |

TECHNICAL FIELDS
SEARCHED      (IPC)

C08J

The present search report has been drawn up for all claims

| Place of search | Date of completion of the search | Examiner |
|---|---|---|
| Munich | 12 April 2012 | Zeslawski, Wojciech |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 00 0508

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2012

| Patent document cited in search report | | Publication date | Patent family member(s) | | Publication date |
|---|---|---|---|---|---|
| US 4414090 | A | 08-11-1983 | NONE | | |
| US 5643968 | A | 01-07-1997 | AU | 5957094 A | 15-08-1994 |
| | | | CA | 2153973 A1 | 21-07-1994 |
| | | | CN | 1091678 A | 07-09-1994 |
| | | | EP | 0679167 A1 | 02-11-1995 |
| | | | JP | H08508758 A | 17-09-1996 |
| | | | US | 5643968 A | 01-07-1997 |
| | | | WO | 9416002 A1 | 21-07-1994 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0563851 A, Fraunhofer
- JP 2003096219 B, Asahi Glass
- WO 2006003182 A, Solvay

**Non-patent literature cited in the description**

- **J. VARCOE et al.** *Chem. Comm.,* 2006, vol. 13, 1428-1429